# EUROPÄISCHE PATENTSCHRIFT

(11) **EP 3 027 289 B1**
(45) Veröffentlichungstag und Bekanntmachung des Hinweises auf die Patenterteilung: **05.04.2017**
(21) Anmeldenummer: 14741888.3
(22) Anmeldetag: 22.07.2014
(51) Int. Cl.: B01D 3/14

(54) **VERFAHREN UND VORRICHTUNG ZUR DESTILLATIVEN TRENNUNG EINES DREI- ODER MEHRKOMPONENTENGEMISCHES**
PROCESS AND APPARATUS FOR THE SEPARATION BY DISTILLATION OF A MIXTURE OF 3 COMPONENTS OR MORE
PROCEDE ET APPAREIL POUR LA SEPARATION D'UN MELANGE DE TROIS COMPOSANTS OU PLUS PAR DISTILLATION

(30) Priorität: 29.07.2013 DE 102013214765
(43) Veröffentlichungstag der Anmeldung: 08.06.2016
(73) Patentinhaber: Wacker Chemie AG, 81737 München (DE)
(72) Erfinder: JANSEN, Helmut, 41542 Dormagen (DE); AIGNER, Maximilian, 52062 Aachen (DE); PROCHASKA, Jan, 84561 Mehring (DE)
(74) Vertreter: Potten, Holger
(86) Internationale Anmeldenummer: PCT/EP2014/065718
(87) Internationale Veröffentlichungsnummer: WO 2015/014671

(56) Entgegenhaltungen:
- EP-A2- 0 141 356
- WO-A1-2008/092575
- US-A1- 2001 010 286
- US-A1- 2011 178 328
- BECKER H ET AL: "PARTITIONED DISTILLATION COLUMNS - WHY, WHEN & HOW", CHEMICAL ENGINEERING, ACCESS INTELLIGENCE ASSOCIATION, ROCKVILLE, MA, US, Bd. 108, Nr. 1, 31. Januar 2001 (2001-01-31), Seiten 68-74, XP001051738, ISSN: 0009-2460

## Beschreibung

Die Erfindung betrifft ein Verfahren zur destillativen Trennung eines vorliegenden Drei- oder Mehrkomponentengemisches in seine Bestandteile, sowie eine Vorrichtung zur Durchführung des Verfahrens durch geeignete Verwendung und Kopplung von mehreren Destillationskolonnen.

Destillative Verfahren sind in der chemischen Verfahrenstechnik üblich, um Gemische verschiedener relativer Flüchtigkeit und/oder ineinander löslicher Stoffe thermisch zu trennen. Die Destillation wird dabei zum Bereich der thermischen Trennverfahren gezählt.

Für die kontinuierliche destillative Zerlegung von Mehrstoffgemischen sind verschiedene Verfahrensvarianten gebräuchlich.

Im einfachsten Fall wird ein Zulaufgemisch, bestehend aus einer Leicht- und einer Schwersiederfraktion in diese beiden Bestandteile zerlegt. Dabei wird das zu trennende Gemisch zwischen Kopf und Sumpf der Destillationskolonne eingebracht. Der Zulauf unterteilt die Kolonne in einen Abtriebs- und einen Verstärkungsteil.
Die Schwersiederfraktion wird im Sumpf der Kolonne entnommen. Für die Beheizung der Kolonne wird ein Teil dieser Fraktion, z. B. über einen Naturumlauf, verdampft und wieder der Kolonne zugeführt. Die Leichtsiederfraktion tritt als Brüdendampf am Kopf der Kolonne aus und wird in einem Kondensator verflüssigt. Ein Teil dieses Kondensats wird wieder in die Kolonne zurückgeführt und läuft im Gegenstrom zu den aufsteigenden Brüden als Rücklauf nach unten.

Bei der Auftrennung von Zulaufgemischen, bestehend aus einem Mehrkomponentengemisch in mehr als zwei Fraktionen müssen dann jedoch mehrere konventionelle Destillationskolonnen eingesetzt werden. Im einfachen Fall werden auf diese Weise für ein N-Komponentengemisch N-1 Destillationskolonnen benötigt.

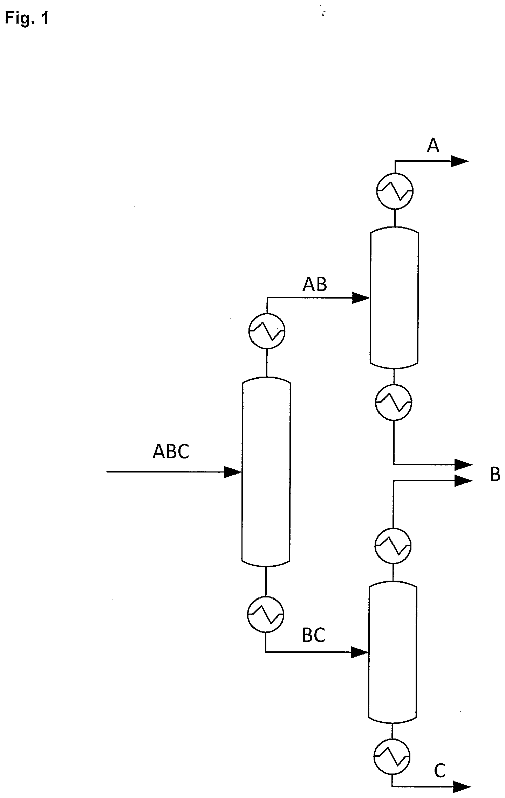

**Fig. 1** zeigt den a/c-Pfad zur Auftrennung eines Dreikomponentengemisches **ABC,** enthaltend Leichtsieder **A,** Mittelsieder **B und** Schwersieder **C.**

Der a/c-Pfad wird bevorzugt angewendet wenn der Anteil an Mittelsieder in der Zugabe am größten ist. Für diesen Fall stellt der a/c-Pfad ein energetisches Optimum dar.

Die Trennung in der ersten Kolonne erfolgt so, dass im Kopfprodukt kein Schwersieder **C** und im Sumpfprodukt kein Leichtsieder **A** vorhanden ist. Der Mittelsieder **B** ist sowohl in der Kopffraktion als auch in der Sumpffraktion der ersten Kolonne enthalten. Beide Fraktionen **AB** und **BC** werden in je einer nachgeschalteten Kolonne in die reinen Produkte **A, B, C** zerlegt. Damit benötigt diese Variante drei Trennschritte.

Eine Alternative zur Kopplung mehrerer Destillationskolonnen sind sogenannte Trennwandkolonnen, d.h. Kolonnen, die mittels einer in Kolonnenlängsrichtung angeordneten vertikalen Trennwand eine Quervermischung von Flüssigkeits- und Brüdenströmen in Teilbereichen der Kolonne verhindern. Bei dieser Kolonne verläuft also über einen Teil der Kolonnenhöhe eine vertikale Trennwand, welche den Querschnitt in zwei Abschnitte links und rechts der Trennwand aufteilt.

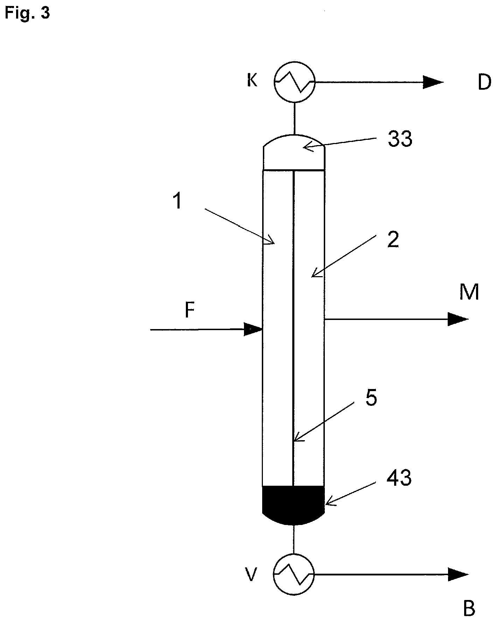

**Fig. 3** zeigt eine klassische Trennwandkolonne, bei der Schwersieder als Sumpf, der Mittelsieder über den Seitenabzug und der Leichtsieder über den Kopfstrom abgeführt wird.

Dabei ist es möglich, zum Beispiel ein Dreistoffgemisch in einer einzigen Kolonne in seine drei reinen Bestandteile zu zerlegen, wozu normalerweise zwei konventionelle Kolonnen benötigt würden.

### Liste der Bezugszeichen

**1** Zulaufteil
**2** Entnahmeteil
**3** Verstärkungsteil
**4** Abtriebsteil
**5** Trennwand

Die in Kolonnenlängsrichtung angeordnete Trennwand **5** teilt den Kolonneninnenraum in einen Zulaufteil **1**, einen Entnahmeteil **2,** einen oberen gemeinsamen Verstärkungsteil **33** und einen unteren gemeinsamen Abtriebsteil **43** (schwarz).

Der Zulauf des aufzutrennenden Gemisches wird in der Regel in einen mittleren Bereich zwischen einem oberen und einem unteren Bereich des Zulaufteils **1** gelegt. Es ist auch möglich, eine oder mehrere weitere Zuläufe zwischen einem oberen und einem unteren Bereich des Zulaufteils **1** vorzusehen.

Im Entnahmeteil **2** - rechts der Trennwand - sind zwischen einem oberen und einem unteren Bereich eine oder mehrere Seitenabzüge angeordnet. Es ist auch möglich, einen weiteren Seitenabzug zwischen dem unteren und einem untersten Bereich des Entnahmeteils **2** vorzusehen.
WO 2009092682 A1 offenbart ein Verfahren zur destillativen Aufarbeitung von 1,5,9-Cyclododecatrien (CDT), sowie eine Vorrichtung zur Durchführung des Verfahrens.
Die Lösung geht aus von einem Verfahren zur destillativen Aufarbeitung von Roh-CDT, das durch die Trimerisierung von Butadien gewonnen wurde.
Zur destillativen Auftrennung des als Mehrkomponentengemisch anfallenden Roh-CDT werden Trennwandkolonnen verwendet. Die Trennwand, die aus einem Blech oder mehreren zusammengefügten Einzelblechen bestehen kann, unterteilt die Kolonne in Längsrichtung in deren mittleren Teil in einen Zulaufteil und einen Entnahmeteil. Bezüglich der einsetzbaren trennwirksamen Einbauten in der Trennwandkolonne sind sowohl Füllkörper als auch geordnete Packungen oder Trennböden geeignet. Es ist möglich, die Trennwand in Form von lose gesteckten Teilsegmenten auszugestalten.
US 6884324 B2 offenbart eine Kolonne zur Aufkonzentration von Phthalsäureanhydrid (PSA) mit zwei Destillationsstufen, in der die Abdestillation der Leichtsieder im Roh-PSA in der ersten Destillationsstufe erfolgt und die Abtrennung der Schwersieder aus dem Rein-PSA in der zweiten Destillationsstufe durchgeführt wird, wobei beide Destillationsstufen nebeneinander angeordnet sind und durch eine senkrecht angeordnete Wand vollständig voneinander getrennt sind, dadurch gekennzeichnet, dass der Sumpf der ersten Destillationsstufe mit dem Sumpf der zweiten Destillationsstufe verbunden ist. Der Sumpf der ersten Destillationsstufe kann durch ein Überlaufrohr mit dem Sumpf der zweiten Destillationsstufe verbunden sein. Ebenso kann der Sumpf der ersten Destillationsstufe durch eine Pumpe mit dem Sumpf der zweiten Destillationsstufe verbunden sein.

Dokument EP 0141356 offenbart eine Vorrichtung und ein Verfahren zur destillativen Trennung eines Drei- oder Mehrkomponentengemisches, umfassend eine Trennwandkolonne mit vier Trennzonen.

Im Stand der Technik ist es also bekannt, zur Auftrennung von Mehrkomponentengemischen mehrere Destillationskolonnen, die in einem Verbund unterschiedliche Trennaufgaben erfüllen, oder eine Trennwandkolonne zu verwenden.
Durch die bereits beschriebenen Trennwandkolonnen sind bezogen auf Betriebs- und Investitionskosten Gesamteinsparungen von ungefähr 30% gegenüber einer herkömmlichen Reihenschaltung von zwei Kolonnen realisierbar. Daher sind Trennwandkolonnen gegenüber der klassischen Verschaltung von Destillationskolonnen zu bevorzugen.

Allerdings müssen Trennwandkolonnen meist größer dimensioniert werden als die entsprechenden Einzelapparate, die durch sie ersetzt werden sollen. Dabei entspricht die Bauhöhe der Trennwandkolonne mindestens der Bauhöhe eines der Einzelapparate und maximal der Summe der Bauhöhen der Einzelapparate.

Der Durchmesser der Trennwandkolonne entspricht in Abhängigkeit der hydraulischen Belastung mindestens dem geringsten Durchmesser der Einzelapparate und maximal dem größeren Durchmesser der Einzelapparate.

Abhängig von der Trennaufgabe (Mehrkomponentengemisch) können extreme Bauhöhen, hohe Kolonnendurchmesser und damit hohe Investitionskosten die Folge sein, was nachteilig ist.

Aus dieser Problematik ergibt sich die Aufgabenstellung der Erfindung.

Die Aufgabe der Erfindung wird gelöst durch ein Verfahren zur destillativen Trennung eines Drei- oder Mehrkomponentengemisches, enthaltend wenigstens einen Leichtsieder, wenigstens einen Mittelsieder und wenigstens einen Schwersieder, wobei das Drei- oder Mehrkomponentengemisch einer ersten Destillationskolonne zugeführt wird, wobei drei Destillationskolonnen vorhanden sind, die stofflich miteinander gekoppelt sind, indem Brüden einer ersten Destillationskolonne kommunikativ mit dem Verstärkungsteil einer zweiten Destillationskolonne und das Verstärkungsteil der zweiten Destillationskolonne kommunikativ mit den Brüden einer dritten Destillationskolonne verbunden sind, und Sumpfabzüge der ersten Destillationskolonne kommunikativ mit dem Abtriebsteil der zweiten Destillationskolonne und das Abtriebsteil der zweiten Destillationskolonne kommunikativ mit dem Sumpf der dritten Destillationskolonne verbunden sind, wobei die zweite Destillationskolonne eine horizontale undurchlässige Trennwand aufweist, die Abtriebsteil und Verstärkungsteil der zweiten Destillationskolonne trennt, wobei die zweite Destillationskolonne einen Verdampfer sowie einen Kondensator umfasst, wobei eine Sumpffraktion enthaltend wenigstens einen Schwersieder und eine Kopffraktion enthaltend wenigstens einen Leichtsieder aus der zweiten Destillationskolonne abgetrennt werden, wobei über einen Seitenabzug der dritten Destillationskolonne wenigstens ein Mittelsieder abgetrennt wird.

Stoffliche Kopplung soll im Rahmen der Erfindung bedeuten, dass jeweils entsprechende Zu- und Rückläufe zwischen den Kolonnen vorhanden sind.

Es werden drei Kolonnen, von denen eine Kolonne eine horizontale Trennwand aufweist, die Abtriebs- und Verstärkungsteil der Kolonne trennt, stofflich derart gekoppelt, so dass die beiden Kolonnen ohne Trennwand quasi als linker und als rechter Teil einer Trennwandkolonne betrachtet werden können.
Das Drei- oder Mehrkomponentengemisch wird einer ersten Kolonne zugeführt, die als linker Teil einer Trennwandkolonne betrachtet werden kann.

Die Brüdendämpfe der ersten Kolonne werden dabei in die zweite Kolonne geführt, in welcher der Abtriebs- vom Verstärkungsteil durch eine horizontale Trennwand, z.B. ein Trennblech, getrennt ist.

In dieser zweiten Kolonne werden das Kopfprodukt, welches wenigstens einen Leichtsieder enthält, sowie das Sumpfprodukt, welches wenigstens einen Schwersieder enthält, abgetrennt.

In einer dritten Kolonne, die als rechter Teil einer Trennwandkolonne angesehen werden kann, wird das Zielprodukt, welches wenigstens einen Mittelsieder enthält, über einen Seitenabzug abgeführt.

Die Aufgabe wird auch gelöst durch eine Vorrichtung zur destillativen Trennung eines Drei- oder Mehrkomponentengemisches, umfassend drei Destillationskolonnen, die stofflich miteinander gekoppelt sind, indem Brüden einer ersten Destillationskolonne kommunikativ mit dem Verstärkungsteil einer zweiten Destillationskolonne und das Verstärkungsteil der zweiten Destillationskolonne kommunikativ mit den Brüden einer dritten Destillationskolonne verbunden sind, und Sumpfabzüge der ersten Destillationskolonne kommunikativ mit dem Abtriebsteil der zweiten Destillationskolonne und das Abtriebsteil der zweiten Destillationskolonne kommunikativ mit dem Sumpf der dritten Destillationskolonne verbunden sind, wobei die zweite Destillationskolonne eine horizontale undurchlässige Trennwand aufweist und einen Verdampfer sowie einen Kondensator umfasst, wobei die dritte Destillationskolonne einen oder mehrere Seitenabzüge unterhalb des Kopfabzuges und oberhalb des Sumpfabzuges aufweist.

Kommunikativ verbunden soll im Rahmen der Erfindung bedeuten, dass jeweils entsprechende Zu- und Rückläufe zwischen den Kolonnen vorhanden sind.

Die Erfindung betrifft also einen apparativen Aufbau, bei dem eine zusätzliche Kolonne mit zwei bestehenden Kolonnen verschaltet wird, um auf diese Weise eine thermische und stoffliche Kopplung zu erreichen.

Im Inneren der zweiten Destillationskolonne wird der Auftriebs- vom Abtriebsteil vorzugsweise durch ein horizontales, undurchlässiges Blech voneinander getrennt. Von der Funktionsweise her ist die Erfindung mit dem Prinzip einer Trennwandkolonne vergleichbar, unterscheidet sich jedoch in der apparativen Ausführung, zumal durch Verwendung einer zwischengeschalteten Kolonne mit horizontalem Trennblech keinerlei vertikale Trennbleche in den Kolonnen notwendig sind.

Die stoffliche Kopplung zweier Kolonnen wird bewerkstelligt, in dem jede Kolonne jeweils mindestens zwei Verknüpfungen an räumlich getrennten Stellen mit einer anderen Kolonne aufweist.

Eine solche Kolonnenkonfiguration ist hinsichtlich des Energiebedarfs mit einer einzigen Trennwandkolonne, welche die identische Stufenzahl besitzt, gleichwertig.

Damit lassen sich große Energieeinsparungen realisieren, wobei aber im Vergleich zur Neuanschaffung einer herkömmlichen, einzelnen Trennwandkolonne niedrigere Investitionskosten anfallen, da bestehende Kolonnen eingesetzt werden können und lediglich eine zusätzliche Kolonne beschafft werden muss, die in ihrer Dimensionierung erheblich kleiner ausfällt, als eine neue Trennwandkolonne. Der Grund hierfür ist die in der Regel geringere Stufenanzahl von Abtriebs- und Verstärkungsteil einer Trennwandkolonne.

Weiterhin behalten die beiden Kolonnen, die bei dieser Konfiguration den Trennwandsektionen entsprechen sollen, in dieser Konfiguration den vollen Durchmesser. Dies erhöht die Kapazität der Anlage im Vergleich zu einer Trennwandkolonne, die lediglich den gleichen Durchmesser hat wie eine der beiden Einzelkolonnen, deutlich.

In den meisten Fällen werden die Investitionskosten für diese Konfiguration daher geringer sein, als eine Neuinvestition in eine äquivalente Trennwandkolonne mit gleicher Trennleistung und Kapazität. Das macht die Erfindung für Revamps interessant, bei denen die Kapazität der Anlage erhöht, gleichzeitig aber der spezifische Energiebedarf reduziert werden soll.

Die Leichtsiederfraktion und die Hochsiederfraktion werden aus der Destillationskolonne mit horizontaler Trennwand entnommen.

Die zweite Destillationskolonne mit horizontaler Trennwand ist vorzugsweise mit einem eigenen Verdampfer und einem Kondensator ausgestattet. Die Betriebsdrücke der Kolonnen werden so eingestellt, dass die vorgeschriebene Strömungsrichtung eingehalten wird.

Beim Drei- oder Mehrkomponentengemische handelt es sich vorzugsweise um ein Gemisch enthaltend Chlorsilane oder um eine Gemisch enthaltend Methylchlorsilane.

Vorzugsweise handelt es sich um Gemische aus der TCS- oder MCS-Synthese (TCS = Trichlorsilan, MCS = Methylchlorsilan) oder aus der Abscheidung von polykristallinem Silicium.

Vorzugsweise handelt es sich um ein Gemisch aus Chlorsilanen enthaltend TCS, STC, DCS sowie Spuren weiterer Verunreinigungen (Methylchlorsilane, Kohlenwasserstoffe, Hochsieder), wie es durch die Reaktion von handelsüblichem metallurgischem Silicium mit HCl in einem Wirbelschichtreaktor bei 350-400 °C erhalten wird.

In einem Verbund zur Herstellung von polykristallinem Silicium wird TCS als Roh-Silan entweder aus metallurgischem Silicium und HCl oder aus metallurgischem Silicium mit STC/H₂ (STC = Siliciumtetrachlorid) in einem Wirbelschichtreaktor erzeugt. Anschließend wird das Roh-Silan mittels Destillation/Reinigung zu TCS gereinigt. Aus dem gereinigten TCS wird polykristallines Silicium abgeschieden, wobei u.a. STC entsteht. Die anschließende Verwertung des STC (z. B. durch Hydrierung zu Trichlorsilan oder durch Verbrennung zu hochdisperser Kieselsäure bzw. Kieselsäureestern) ist üblich.

Bei der Abscheidung von polykristallinem Silicium aus einem Gemisch von Chlorsilan, insbesondere TCS, und Wasserstoff entsteht neben STC eine Fraktion hochsiedender Chlorsilane. Der Begriff "hochsiedende Chlorsilane" bezeichnet dabei Verbindungen, welche aus Silicium, Chlor, ggf. Wasserstoff, Sauerstoff und Kohlenstoff bestehen und einen höheren Siedepunkt als STC (57°C/bei 1013 hPa) aufweisen. Bevorzugt handelt es sich um Disilane HₙCl₆₋ₙSi₂ (n= 0 - 4) und höhere Oligo(chlor)silane vorzugsweise mit 2 bis 4 Si Atomen sowie Disiloxane HₙCl₆₋ₙSi₂O (n= 0 - 4) und höhere Siloxane vorzugsweise mit 2 bis 4 Si Atomen einschließlich zyklischer Oligosiloxane sowie deren Methylderivate.

Bei den Rückständen (Hochsieder) des Müller-Rochow-Prozesses handelt es im Wesentlichen um Tetrachlordimethyldisilan, Trichlortrimethyldisilan und Dichlortetramethyldisilan, also um Methylchlordisilane der allgemeinen Zusammensetzung Me₆₋ₓClₓSi₂. Diese können mit metallurgischem Silicium und HCl bei einer Temperatur von mindestens 300°C behandelt werden. Dabei entstehen TCS und STC.

Bei den Hochsiedern im Abgas der Abscheidung von polykristallinem Silicium (Siemens-Prozess) handelt es sich hauptsächlich um Chlordisilane der allgemeinen Zusammensetzung H₆₋ₓClₓSi₂ und ggf. Chlordisiloxane H₆₋ₓClₓSi₂O. Daneben sind in den Abgasen TCS, STC, DCS enthalten.

Bevorzugte Ausführungen der Erfindung und deren Unterschiede zum Stand der Technik werden im Folgenden auch anhand von Figuren erläutert.

### Kurzbeschreibung der Figuren

**Fig. 1** zeigt den a/c-Pfad zur Auftrennung eines Dreikomponentengemisches ABC enthaltend Leichtsieder A, Mittelsieder B und Schwersieder C gemäß Stand der Technik.
**Fig. 2** zeigt eine klassische Destillationsanordnung bestehend aus einer Abtriebskolonne inklusive Verdampfer und Kondensator sowie einer Auftriebskolonne inklusive Verdampfer und Kondensator.
**Fig. 3** zeigt eine Trennwandkolonne zur Auftrennung eines Dreikomponentengemisches gemäß Stand der Technik.
**Fig. 4** zeigt eine erfindungsgemäße Kolonnenkonfiguration bestehend aus drei Kolonnen zur Auftrennung eines Dreikomponentengemisches.

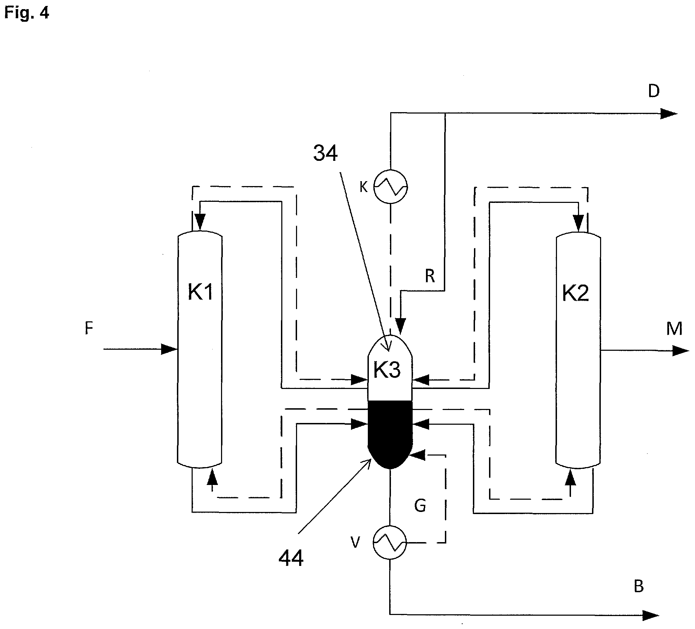

Die beiden Kolonnen **K1** und **K2** in **Fig. 4** sind mit der Kolonne **K3** kommunikativ über Rohrleitungen verbunden.

Die Kolonnen **K1** und **K2** entsprechen hierbei der linken, bzw. der rechten Seite der Trennwandsektionen einer äquivalenten Trennwandkolonne.

Die Kolonne **K3** besteht aus einem Abtriebsteil **44** (schwarz) und einem Verstärkungsteil **43,** die durch ein horizontales Trennblech voneinander getrennt werden.

Die beiden Sektionen in der Kolonne **K3** entsprechen somit dem gemeinsamen Abtriebs- und Verstärkungsteil der äquivalenten Trennwandkolonne.

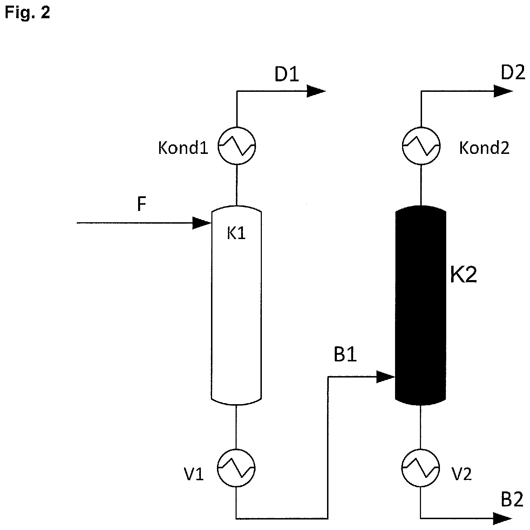

Die Erfindung wird bevorzugt dann eingesetzt, wenn ein bestehendes Kolonnensystem - z. B. wie in **Fig. 2** dargestellt - vorhanden ist, stattdessen jedoch die Technologie der Trennwandkolonne gemäß **Fig. 3** genutzt werden soll.

Da die Ausführung gemäß **Fig. 4** einer Trennwandkolonne äquivalent ist, muss auf diese Weise lediglich eine zusätzliche, kleinere Kolonne angeschafft werden, die mit den beiden bestehenden Kolonnen über Rohrleitungen verbunden wird.

Diese neue Kolonne wird zusätzlich mit mindestens einem Verdampfer V und mindestens einem Kondensator **K** ausgestattet.

Auf diese Weise reduziert sich der Investitionsaufwand für die Trennwandtechnologie erheblich, wenn an den bestehenden Apparaten **K1** und **K2** keine weiteren Maßnahmen vorgenommen werden müssen. Lediglich der Aufwand für die Verbindung zur Kolonne **K3** muss berücksichtigt werden.

Bei sinnvoller Dimensionierung der Kolonne **K3** erhöht sich mit der Erfindung der mögliche Durchsatz der Anlage um bis zu 80 % der bisherigen Maximalkapazität.

Die in der Erfindung eingesetzten Destillationskolonnen sind vorzugsweise mit Trennstufen unterschiedlicher Art wie Trennböden (z. B. Siebböden, Festventilen), regellosen Packungen (Füllkörpern) oder strukturierten Packungen ausgestattet. Die Einbauten bestimmen maßgeblich die Trennleistung und den Druckverlust über die Destillationskolonnen.

Die beschriebenen Destillationskolonnen besitzen vorzugsweise 1-200 theoretische Trennstufen, wobei die notwendige Anzahl an theoretischen Trennstufen von der Qualität bzw. dem Verunreinigungsgrad des zu zerlegenden Ausgangsgemisches, der spezifizierten Reinheitsanforderungen des Zielprodukts sowie der relativen Flüchtigkeit der einzelnen Komponenten des Mehrkomponentengemischs, bezogen auf die Schlüsselkomponente, abhängig ist.

Die Destillationskolonnen werden vorzugsweise bei einem Abgasdruck von -1 bis +10 bar und einem Siedetemperaturbereich von -20 bis +200 °C betrieben.

Bezogen auf einen Destillationsverbund, bestehend aus mehreren Einzelapparaten, kann der Abgasdruck -unter Berücksichtigung wirtschaftlicher Aspekte- unterschiedlich gewählt werden.

Die Kolonne K3 ist dabei vorzugsweise mit einem oder mehreren Verdampfersystemen für die Zuführung von Heizenergie ausgestattet. Bei einem herkömmlichen Verdampfersystem werden ein oder mehrere Wärmeerzeuger über Verbindungsstücke/Passstücke an den Kolonnenkörper eines Einzelapparats geflanscht. Vorzugsweise ist der Kolonnenkörper mit einer weiteren Anbindung für ein zweites Verdampfersystem ausgestattet.

Dabei kann der Wärmeerzeuger aus verfahrenstechnischer Sicht in unterschiedlichster Form ausgeführt sein - vorzugsweise jedoch als Naturumlaufverdampfer.

Bevorzugte Betriebsmittel für die Verdampfung sind Wasserdampf und/oder Thermoöle verschiedener Druck- und Temperaturstufen. Die Wahl der geeigneten Betriebsmittel richtet sich vorrangig nach wirtschaftlichen Aspekten sowie der Verfügbarkeit.

Werden wie in **Fig. 4** die Destillationskolonnen **K1** und **K2** an die Kolonne **K3** gekoppelt, so wird vorzugsweise mindestens ein Brüdenrohr der jeweiligen Kolonne direkt mit dem Kolonnenkörper von **K3** verbunden.

Für den Rücklauf der beiden Kolonnen **K1** und **K2** werden entsprechende Rücklaufleitungen von der Kolonne **K3** direkt mit dem Kolonnenkörper von **K1** bzw. **K2** verbunden

Weiterhin werden die Flüssigkeitsströme am Sumpf der beiden Kolonnen **K1** und **K2** über entsprechende Rohrleitungen direkt in den Verstärkungsteil der Kolonne **K3** geführt. Diese Flüssigkeitsströme dienen im Verstärkungsteil der Kolonne **K3** als Rücklauf. Die Brüden aus der Kolonne **K3** werden über entsprechende Rohrleitungen in die beiden Kolonnen **K1** und **K2** zurückgeführt. Hierfür können bestehende Flanschverbindungen an den Kolonnen **K1** und **K2** verwendet werden.

Die Kolonne **K3** ist außerdem vorzugsweise mit einem oder mehreren Kondensationssystemen zur Kondensation des Brüdendampfes und damit zur Breitstellung der Rücklaufmenge in die Kolonne **K3** ausgestattet.

Die im ersten Kondensationsschritt nicht kondensierbaren Bestandteile, bestehend aus Komponenten geringerer Siedetemperaturen und/oder Inertgas, werden vorzugsweise einem weiteren Kondensationsschritt und/oder einer weiteren Aufarbeitung/sonstigen Verwendung (vorzugsweise einem Wäschersystem) zugeführt. Bevorzugte Betriebsmittel für die Kondensation sind Kühlwasser und/oder Kühlsole verschiedener Druck- und Temperaturstufen. Die Wahl der geeigneten Betriebsmittel richtet sich vorrangig nach wirtschaftlichen Aspekten sowie der Verfügbarkeit.

Die Kolonnen **K1** und **K2** umfassen vorzugsweise einen oder mehrere Zugabe- und Produktabzugsstutzen entlang des jeweiligen Kolonnenmantels. Die Lage am Umfang und Höhe des Kolonnenkörpers wird entsprechend der thermodynamischen Auslegung an einer geeigneten Position gewählt.

### Beispiel und Vergleichsbeispiel

### Vergleichsbeispiel - Klassische Schaltung

**Fig. 2** zeigt eine klassische Destillationsanordnung umfassend Abtriebskolonne **K1** inklusive Verdampfer **V1** und Kondensator **Kond1** sowie Verstärkungskolonne **K2** inklusive Verdampfer **V2** und Kondensator **Kond2** zur Auftrennung eines Dreikomponentengemisches.

Der Stoffstrom **F** besteht aus einem chlorsilanhaltigen Gemisch mit einer Leichtsieder-, Mittelsieder- und einer Schwersiederfraktion.

In der Kolonne **K1** wird die Leichtsiederfraktion über den Stoffstrom **D1** abgetrennt.

Der Stoffstrom **B1** wird in die zweite Kolonne **K2** geführt, in der über den Stoffstrom **B2** die Schwersiederfraktion und über den Stoffstrom **D2** das Zielprodukt (Mittelsiederfraktion) abgezogen wird.

**Tabelle 1** zeigt die Massenanteile der einzelnen Komponenten in den jeweiligen Teilströmen gemäß **Vergleichsbeispiel.**

**Tabelle 1**

| Stoffstrom | F | D1 | B1 | D2 | B2 |
|---|---|---|---|---|---|
| Komponente | | | | | |
| TCS | 99,5 % | 90 % | 99,9 % | 99,99 % | 99,99 % |
| DCS | 0,5 % | 10% | - | - | - |
| C1 | <10 ppmw | - | 10 ppmw | 1 ppmw | 300 ppmw |
| C2 | <0,5 ppmw | 10 ppmw | 0,04 ppmw | 0,04 ppmw | - |
| C3 | <10 ppmw | 20 ppmw | - | - | - |

Bei C1-C3 handelt es sich um Spurenverunreinigungen wie Methylchlorsilane, Kohlenwasserstoffe und Dotierstoffverbindungen.

### Beispiel

**Fig. 4** zeigt eine bevorzugte Ausführungsform einer erfindungsgemäßen Kolonnenkonfiguration, umfassend eine erste Kolonne **K1,** eine zweite Kolonne **K2** sowie eine dritte Kolonne **K3** inklusive Verdampfer **V** und Kondensator **K.**

Der Stoffstrom **F** besteht aus einem chlorsilanhaltigen Gemisch mit einer Leichtsieder-, Mittelsieder- und einer Schwersiederfraktion. Dieser Stoffstrom wird in der Kolonne **K1** zugegeben.

In der Kolonne **K3** wird die Leichtsiederfraktion (enthaltend DCS und C3) über den Stoffstrom **D** abgetrennt. Die Schwersiederfraktion (enthaltend C1) wird ebenfalls in der Kolonne **K3** über den Stoffstrom **B** abgetrennt.

In der Kolonne **K2** wird über einen Seitenabzug das Zielprodukt **M** (Mittelsiederfraktion, enthaltend TCS) abgezogen.

**Tabelle 2** zeigt die Massenanteile der einzelnen Komponenten in den jeweiligen Teilströmen gemäß **Beispiel**

**Tabelle 2**

| Stoffstrom | F | D | B | M |
|---|---|---|---|---|
| Komponente | | | | |
| TCS | 99,5 % | 90 % | 99,9 % | 99,99 % |
| DCS | 0,5 % | 10% | - | - |
| C1 | <10 ppmw | - | 300 ppmw | 1 ppmw |
| C2 | <0,5 ppmw | 10 ppmw | - | 0,04 ppmw |
| C3 | < 10 ppmw | 20 ppmw | - | - |

Gegenüber dem Vergleichsbeispiel wird deutlich, dass auf je einen Verdampfer und einen Kondensator verzichtet werden kann.

## Patentansprüche

1. Verfahren zur destillativen Trennung eines Drei- oder Mehrkomponentengemisches (F), enthaltend wenigstens einen Leichtsieder, wenigstens einen Mittelsieder und wenigstens einen Schwersieder, wobei das Drei- oder Mehrkomponentengemisch (F) einer ersten Destillationskolonne (K1) zugeführt wird, wobei drei Destillationskolonnen (K1, k2, K3) vorhanden sind, die stofflich miteinander gekoppelt sind, indem Brüden einer ersten Destillationskolonne (K1) kommunikativ mit dem Verstärkungsteil (34) einer zweiten Destillationskolonne (K3) und das Verstärkungsteil der zweiten Destillationskolonne (K3) kommunikativ mit den Brüden einer dritten Destillationskolonne (K2) verbunden sind, und Sumpfabzüge der ersten Destillationskolonne (K1) kommunikativ mit dem Abtriebsteil (44) der zweiten Destillationskolonne (K3) und das Abtriebsteil (44) der zweiten Destillationskolonne (K3) kommunikativ mit dem Sumpf der dritten Destillationskolonne (K2) verbunden sind, wobei die zweite Destillationskolonne (K3) eine horizontale undurchlässige Trennwand aufweist, die Abtriebsteil (44) und Verstärkungsteil (34) der zweiten Destillationskolonne (K3) trennt, wobei die zweite Destillationskolonne (K3) einen Verdampfer (V) sowie einen Kondensator (K) umfasst, wobei eine Sumpffraktion (B) enthaltend wenigstens einen Schwersieder und eine Kopffraktion (D) enthaltend wenigstens einen Leichtsieder aus der zweiten Destillationskolonne (K3) abgetrennt werden, wobei über einen Seitenabzug der dritten Destillationskolonne (K2) wenigstens ein Mittelsieder (M) abgetrennt wird.

2. Verfahren nach Anspruch 1, wobei die Destillationskolonnen (K1, K2, K3) bei einem Abgasdruck von -1 bis + 10 bar und einem Siede-Temperaturbereich von -20 bis + 200 °C betrieben werden.

3. Verfahren nach Anspruch 1 oder nach Anspruch 2, wobei wenigstens die zweite Destillationskolonne (K3) ein oder mehrere Verdampfersysteme (V) umfasst, die Wasserdampf oder Thermoöle verschiedener Druck- und Temperaturstufen als Betriebsmittel benutzen.

4. Verfahren nach einem der Ansprüche 1 bis 3, wobei wenigstens die zweite Destillationskolonne (K3) ein oder mehrere Kondensationssysteme (K) umfasst, die Kühlwasser oder Kühlsole verschiedener Druck- und Temperaturstufen als Betriebsmittel benutzen.

5. Verfahren nach Anspruch 4, wobei in einem ersten Kondensationsschritt nicht kondensierbare Kopfstromkomponenten einem weiteren Kondensationsschritt und/oder einem Wäschersystem zugeführt werden.

6. Verfahren nach einem der Ansprüche 1 bis 5, wobei das Drei- oder Mehrkomponentengemisch Chlorsilane als Mittelsieder (M) enthält.

7. Vorrichtung zur destillativen Trennung eines Drei- oder Mehrkomponentengemisches (F), umfassend drei Destillationskolonnen (K1, K2, K3), die stofflich miteinander gekoppelt sind, indem Brüden einer ersten Destillationskolonne (K1) kommunikativ mit dem Verstärkungsteil (34) einer zweiten Destillationskolonne (K3) und das Verstärkungsteil der zweiten Destillationskolonne (K3) kommunikativ mit den Brüden einer dritten Destillationskolonne (K2) verbunden sind, und Sumpfabzüge der ersten Destillationskolonne (K1) kommunikativ mit dem Abtriebsteil (44) der zweiten Destillationskolonne (K3) und das Abtriebsteil (44) der zweiten Destillationskolonne (K3) kommunikativ mit dem Sumpf der dritten Destillationskolonne (K2) verbunden sind, wobei die zweite Destillationskolonne (K3) eine horizontale undurchlässige Trennwand aufweist und einen Verdampfer sowie einen Kondensator umfasst, wobei die dritte Destillationskolonne (K2) einen oder mehrere Seitenabzüge unterhalb des Kopfabzuges und oberhalb des Sumpfabzuges aufweist.

8. Vorrichtung nach Anspruch 7, wobei die erste und die dritte Destillationskolonne (K1, K2) 1 - 200 theoretische Trennstufen aufweisen.

9. Vorrichtung nach Anspruch 7 oder nach Anspruch 8, wobei wenigstens die zweite Destillationskolonne (K3) ein oder mehrere Verdampfersysteme (V) zum Verdampfen von flüssigen Sumpfströmen umfasst, die jeweils an den Kolonnenkörper geflanscht sind.

10. Vorrichtung nach einem der Ansprüche 7 bis 9, wobei wenigstens die zweite Destillationskolonne ein oder mehrere Kondensationssysteme (K) zur Kondensation von dampfförmigen Brüdenströmen umfasst.

## Claims

1. Process for distillative separation of a mixture (F) of three or more components comprising at least one low boiler, at least one middle boiler and at least one high boiler, wherein the mixture (F) of three or more components is supplied to a first distillation column (K1), wherein three distillation columns (K1, k2, K3) are present which are coupled with one another so as to allow mass transfer such that vapors from a first distillation column (K1) are communicatively connected to the rectifying section (34) of a second distillation column (K3) and the rectifying section of the second distillation column (K3) is communicatively connected to the vapors of a third distillation column (K2) and bottom draws from the first distillation column (K1) are communicatively connected to the stripping section (44) of the second distillation column (K3) and the stripping section (44) of the second distillation column (K3) is communicatively connected to the bottom of the third distillation column (K2), wherein the second distillation column (K3) comprises a horizontal impermeable dividing wall dividing the stripping section (44) and rectifying section (34) of the second distillation column (K3), wherein the second distillation column (K3) comprises an evaporator (E) and also a condenser (C), wherein a bottoms fraction (B) comprising at least one high boiler and a tops fraction (D) comprising at least one low boiler are removed from the second distillation column (K3), wherein at least one middle boiler (M) is removed from a side draw of the third distillation column (K2).

2. Process according to Claim 1, wherein the distillation columns (K1, K2, K3) are operated at an off-gas pressure of from -1 to +10 bar and a boiling temperature range of from -20 to +200°C.

3. Process according to Claim 1 or according to Claim 2, wherein at least the second distillation column (K3) comprises one or more evaporator systems (E) using water vapor and/or thermal oils of various pressure and temperature ratings as operating media.

4. Process according to any one of Claims 1 to 3, wherein at least the second distillation column (K3) comprises one or more condensation systems (C) using cooling water or cooling brine of various pressure and temperature ratings as operating media.

5. Process according to Claim 4, wherein top stream components not condensable in a first condensation step are supplied to a further condensation step and/or a scrubber system.

6. Process according to any one of Claims 1 to 5, wherein the mixture of three or more components comprises chlorosilanes as middle boilers (M).

7. Apparatus for distillative separation of a mixture (F) of three or more components, comprising three distillation columns (K1, K2, K3) coupled with one another so as to allow mass transfer such that vapors from a first distillation column (K1) are communicatively connected to the rectifying section (34) of a second distillation column (K3) and the rectifying section of the second distillation column (K3) is communicatively connected to the vapors of a third distillation column (K2) and bottom draws from the first distillation column (K1) are communicatively connected to the stripping section (44) of the second distillation column (K3) and the stripping section (44) of the second distillation column (K3) is communicatively connected to the bottom of the third distillation column (K2), wherein the second distillation column (K3) comprises a horizontal impermeable dividing wall and comprises an evaporator and also a condenser, wherein the third distillation column (K2) comprises one or more side draws below the top draw and above the bottom draw.

8. Apparatus according to Claim 7, wherein the first and the third distillation columns (K1, K2) comprise 1 - 200 theoretical plates.

9. Apparatus according to Claim 7 or according to Claim 8, wherein at least the second distillation column (K3) comprises one or more evaporator systems (E) for evaporating liquid bottom streams and each of said evaporator systems is flanged to the column body.

10. Apparatus according to any one of Claims 7 to 9, wherein at least the second distillation column comprises one or more condensation systems (C) for condensing vaporous streams.

## Revendications

1. Procédé de séparation distillative d'un mélange à trois composants ou plus (F), contenant au moins un composant de point d'ébullition faible, au moins un composant de point d'ébullition moyen et au moins un composant de point d'ébullition élevé, le mélange à trois composants ou plus (F) étant introduit dans une première colonne de distillation (K1), trois colonnes de distillation (K1, K2, K3) étant présentes, qui sont couplées les unes avec les autres en termes de matière en ce que les vapeurs d'une première colonne de distillation (K1) communiquent avec la zone d'enrichissement (34) d'une deuxième colonne de distillation (K3) et la zone d'enrichissement de la deuxième colonne de distillation (K3) communique avec les vapeurs d'une troisième colonne de distillation (K2), et les sorties de fond de la première colonne de distillation (K1) communiquent avec la zone de rectification (44) de la deuxième colonne de distillation (K3) et la zone de rectification (44) de la deuxième colonne de distillation (K3) communique avec le fond de la troisième colonne de distillation (K2), la deuxième colonne de distillation (K3) comprenant une paroi de séparation imperméable horizontale, qui sépare la zone de rectification (44) et la zone d'enrichissement (34) de la deuxième colonne de distillation (K3), la deuxième colonne de distillation (K3) comprenant un évaporateur (V) et un condensateur (K), une fraction de fond (B) contenant au moins un composant de point d'ébullition élevé et une fraction de tête (D) contenant au moins un composant de point d'ébullition faible étant séparées à partir de la deuxième colonne de distillation (K3), au moins un composant de point d'ébullition moyen (M) étant séparé par une sortie latérale de la troisième colonne de distillation (K2).

2. Procédé selon la revendication 1, dans lequel les colonnes de distillation (K1, K2, K3) sont exploitées à une pression de gaz d'échappement de -1 à +10 bar et dans une plage de température d'ébullition de -20 à +200 °C.

3. Procédé selon la revendication 1 ou la revendication 2, dans lequel au moins la deuxième colonne de distillation (K3) comprend un ou plusieurs systèmes d'évaporateur (V) qui utilisent de la vapeur d'eau ou des huiles thermiques à différents niveaux de pression et de température en tant qu'agent d'exploitation.

4. Procédé selon l'une quelconque des revendications 1 à 3, dans lequel au moins la deuxième colonne de distillation (K3) comprend un ou plusieurs systèmes de condensation (K), qui utilisent de l'eau de refroidissement ou de la saumure de refroidissement à différents niveaux de pression et de température en tant qu'agent d'exploitation.

5. Procédé selon la revendication 4, dans lequel les composants du courant de tête non condensables lors d'une première étape de condensation sont introduits dans une étape de condensation supplémentaire et/ou un système d'épurateur.

6. Procédé selon l'une quelconque des revendications 1 à 5, dans lequel le mélange à trois composants ou plus contient des chlorosilanes en tant que composant de point d'ébullition moyen (M).

7. Dispositif pour la séparation distillative d'un mélange à trois composants ou plus (F), comprenant trois colonnes de distillation (K1, K2, K3), qui sont couplées les unes avec les autres en termes de matière en ce que les vapeurs d'une première colonne de distillation (K1) communiquent avec la zone d'enrichissement (34) d'une deuxième colonne de distillation (K3) et la zone d'enrichissement de la deuxième colonne de distillation (K3) communique avec les vapeurs d'une troisième colonne de distillation (K2), et les sorties de fond de la première colonne de distillation (K1) communiquent avec la zone de rectification (44) de la deuxième colonne de distillation (K3) et la zone de rectification (44) de la deuxième colonne de distillation (K3) communique avec le fond de la troisième colonne de distillation (K2), la deuxième colonne de distillation (K3) comprenant une paroi de séparation imperméable horizontale, ainsi qu'un évaporateur et un condensateur, la troisième colonne de distillation (K2) comprenant une ou plusieurs sorties latérales en dessous de la sortie de tête et au-dessus de la sortie de fond.

8. Dispositif selon la revendication 7, dans lequel la première et la troisième colonne de distillation (K1, K2) comprennent 1 à 200 étapes de séparation théoriques.

9. Dispositif selon la revendication 7 ou selon la revendication 8, dans lequel au moins la deuxième colonne de distillation (K3) comprend un ou plusieurs systèmes d'évaporateur (V) pour l'évaporation de courants de fond liquides, qui sont chacun fixés par une bride au corps de la colonne.

10. Dispositif selon l'une quelconque des revendications 7 à 9, dans lequel au moins la deuxième colonne de distillation comprend un ou plusieurs systèmes de condensation (K) pour la condensation de courants de vapeur gazeux.
